# EUROPEAN PATENT APPLICATION

(11) **EP 4 310 466 A1**
(43) Date of publication of application: **24.01.2024**
(21) Application number: 23164633.2
(22) Date of filing: 28.03.2023
(51) Int. Cl.: G01H 1/04, G01S 5/22

(54) **METHOD FOR DETECTING FAILURE OF VEHICLE, SYSTEM, VEHICLE, ELECTRONIC DEVICE, AND STORAGE MEDIUM**

(30) Priority: 22.07.2022 CN 202210871825
(71) Applicant: Foxconn Interconnect Technology Limited, KY1-1111, Grand Cayman (KY)
(72) Inventor: LIEN, Yu-Tan, Grand Cayman (KY); LEE, Chia-Yen, Grand Cayman (KY)
(74) Representative: Zaboliene, Reda

(57) **Abstract**

A method for detecting failure of vehicle is provided. The method obtains noise data of the vehicle from microphone units. The microphone units are arranged on different positions of the vehicle. The method detects sets of coordinate data of noise sound sources which is determined according to the noise data. The sets of coordinate data of the noise sound sources are relative sets of coordinate data. The method detects a noise type of each noise sound source according to the noise data. The method matches the sets of coordinate data and a modeled image of the vehicle, to determine an absolute coordinate data of each noise sound source in the vehicle. The method determines failure parts of the vehicle according to the noise type of each noise sound source and the absolute coordinate data. A related electronic device and a related non-transitory storage medium are provided.

## Description

### FIELD

The subject matter herein generally relates to a detection technology, and particularly to a method for detecting failure of vehicle, a system for detecting failure of vehicle, a vehicle, an electronic device, and a storage medium.

### BACKGROUND

As a vehicle travels, various noises may be generated. Some noises are generated by one or more failure parts of the vehicle. If the failure part of the vehicle cannot be founded timely, a safety issue of the vehicle may arise. In an existing method for detecting failure based on noise data, an automotive stethoscope is employed by an operator to detect the failure. However, the existing method depends on the experience of the operator, it may time consuming and costly, and generally not reliable.

### SUMMARY

An embodiment of the present application provides a method for detecting failure of vehicle, a system for detecting failure of vehicle, a vehicle, an electronic device, and a storage medium which are capable of detecting an origin of one or more abnormal sounds of the vehicle, to position a failure of the vehicle, thereof a safety of the vehicle can be improved.

In a first aspect, an embodiment of the present application provides a method for detecting failure of vehicle. The method includes obtaining noise data of the vehicle from a number of microphone units. The microphone units are arranged on different positions of the vehicle. The method includes detecting sets of coordinate data of one or more noise sound sources. The sets of coordinate data of the one or more noise sound sources are determined according to the noise data. The sets of coordinate data of the one or more noise sound sources are relative sets of coordinate data. The method includes detecting a noise type of each noise sound source. The noise type is determined according to the noise data. The method includes matching the sets of coordinate data of the one or more noise sound sources and a modeled image of the vehicle, to determine an absolute coordinate data of each noise sound source in the vehicle. The method includes determining one or more failure parts of the vehicle according to the noise type of each noise sound source and the absolute coordinate data of each noise sound source in the vehicle.

According to some embodiments of the present application, the method determines that there is no failure part in the position corresponding to the absolute coordinate data of the noise sound source in the vehicle when the noise type of the noise sound source is a road noise, and determines that the part of the vehicle in the position corresponding to the absolute coordinate data of the noise sound source in the vehicle is the failure part when the noise type of the noise sound source is one of a group consisting of a mechanical noise, an assembling noise, and a tyre noise.

According to some embodiments of the present application, the method further recommends a maintenance manner for each failure part according to the noise type of each noise sound source and a corresponding failure part.

According to some embodiments of the present application, each microphone unit includes a sets of microphone coordinate data. The sets of microphone coordinate data is relative sets of microphone coordinate data. The method positions the one or more noise sound sources according to at least one of a group consisting of a frequency of the noise data, an amplitude of the noise data, and a strength of the noise data. The method generates sets of coordinate data of one or more noise sound sources according to the sets of microphone coordinate data and the positioned one or more noise sound sources. The sets of coordinate data of the one or more noise sound sources and the sets of microphone coordinate data are the sets of coordinate under the same coordinate system.

According to some embodiments of the present application, the method employs at least one of a group consisting of a beamforming method, a high resolution spectral estimation methodology, a time-difference of arrival approach, an auditory scene analysis, and a blind signal separation, to position the one or more noise sound sources.

According to some embodiments of the present application, each microphone unit further includes an Ultra Wide Band tag. The method determines the relative sets of microphone coordinate data of each microphone unit according to a communication among the Ultra Wide Band tags of the microphone units obtained from the microphone units.

According to some embodiments of the present application, the method determines a number of matching degrees between the noise data and a number of voiceprint models, determines a number of target voiceprint models corresponding to a number of largest matching degrees which each is greater than or equal to a preset threshold, and determines the noise type of each noise sound source to be a noise type corresponding to each of the target voiceprint models.

In a second aspect, an embodiment of the present application provides a system for detecting failure of vehicle. The system includes an obtaining module, a coordinate determining module, a noise analyzing module, an image processing module, and a failure determining module. The obtaining module is configured to obtain noise data of the vehicle from a number of microphone units. The microphone units are arranged on different positions of the vehicle. The coordinate determining module is configured to detect sets of coordinate data of one or more noise sound sources. The sets of coordinate data of the one or more noise sound sources are determined according to the noise data. The sets of coordinate data of at least one noise sound source are relative sets of coordinate data of at least one noise sound source. The noise analyzing module is configured to detect a noise type of each noise sound source, the noise type being determined according to the noise data. The image processing module is configured to match the sets of coordinate data of the one or more noise sound sources and a modeled image of the vehicle, to determine an absolute coordinate data of each noise sound source in the vehicle. The failure determining module is configured to determine one or more failure parts of the vehicle according to the noise type of each noise sound source and the absolute coordinate data of each noise sound source in the vehicle.

In a third aspect, an embodiment of the present application provides an electronic device. The electronic device includes a storage unit, and at least one processor. The storage unit stores one or more programs, which when executed by the at least one processor, cause the at least one processor to obtain noise data of the vehicle from a number of microphone units. The microphone units are arranged on different positions of the vehicle. The at least one processor detects sets of coordinate data of one or more noise sound sources. The sets of coordinate data of the one or more noise sound sources are determined according to the noise data. The sets of coordinate data of the one or more noise sound sources are relative sets of coordinate data of the one or more noise sound sources. The at least one processor detects a noise type of each noise sound source. The noise type is determined according to the noise data. The at least one processor matches the sets of coordinate data of the one or more noise sound sources and a modeled image of the vehicle, to determine an absolute coordinate data of each noise sound source in the vehicle. The at least one processor further determines one or more failure parts of the vehicle according to the noise type of each noise sound source and the absolute coordinate data of each noise sound source in the vehicle.

In a fourth aspect, an embodiment of the present application also provides a non-transitory storage unit. The non-transitory storage medium stores a set of commands, when the commands being executed by at least one processor of a vehicle, causing the at least one processor to obtain noise data of the vehicle from a number of microphone units. The microphone units are arranged on different positions of the vehicle. The at least one processor detects sets of coordinate data of one or more noise sound sources. The sets of coordinate data of the one or more noise sound sources are determined according to the noise data. The sets of coordinate data of the one or more noise sound sources are relative sets of coordinate data of the one or more noise sound sources. The at least one processor detects a noise type of each noise sound source. The noise type is determined according to the noise data. The at least one processor matches the sets of coordinate data of the one or more noise sound sources and a modeled image of the vehicle, to determine an absolute coordinate data of each noise sound source in the vehicle. The at least one processor further determines one or more failure parts of the vehicle according to the noise type of each noise sound source and the absolute coordinate data of each noise sound source in the vehicle.

In the disclosure, the noise data of the vehicle from a number of microphone units is obtained, to detect the sets of coordinate data of one or more noise sound sources and the noise type of each noise sound source. The sets of coordinate data of the one or more noise sound sources and a modeled image of the vehicle are matched, to determine an absolute coordinate data of each noise sound source in the vehicle. And, one or more failure parts of the vehicle are determined according to the noise type of each noise sound source and the absolute coordinate data of each noise sound source in the vehicle. Thus, the disclosure can lower the manpower cost and the time cost for detecting, and the safety of the vehicle is improved.

### BRIEF DESCRIPTION OF THE DRAWINGS

Many aspects of the disclosure can be better understood with reference to the following drawings. The components in the drawings are not necessarily drawn to scale, the emphasis instead being placed upon clearly illustrating the principles of the disclosure. Moreover, in the drawings, like reference numerals designate corresponding parts throughout the several views.
FIG. 1 is a flowchart of an embodiment of a method for detecting failure of vehicle.
FIG. 2 is a schematic view of an embodiment of some components installed on a vehicle.
FIG. 3 is a block diagram of an embodiment of a device for detecting failure of vehicle.
FIG. 4 is a block diagram of an embodiment of an electronic device.

### DETAILED DESCRIPTION

For clarity, of illustration of objectives, features and advantages of the present disclosure, the drawings combined with the detailed description illustrate the embodiments of the present disclosure hereinafter. It is noted that embodiments of the present disclosure and features of the embodiments can be combined, when there is no conflict.

Various details are described in the following descriptions for better understanding of the present disclosure, however, the present disclosure may also be implemented in other ways other than those described herein. The scope of the present disclosure is not to be limited by the specific embodiments disclosed below.

Unless defined otherwise, all technical and scientific terms used herein have the same meaning as commonly understood by one of ordinary skill in the art to which the present disclosure belongs. The terms used herein in the present disclosure are only for the purpose of describing specific embodiments, and are not intended to limit the present disclosure.

It can be understood that, during a travel of a vehicle, various noises may be generated. Some noises are generated by one or more failed part of the vehicle. If the failed part of the vehicle cannot be founded timely, a safety trouble of the vehicle can be increased. In a nowadays method for detecting failure based on noise data, an automotive stethoscope is employed by an operator to detect the failure. However, the nowadays method depends on an experience of the operator, it is time consumption and cost consumption, and a possibility of a missed detection and a false detection is increased.

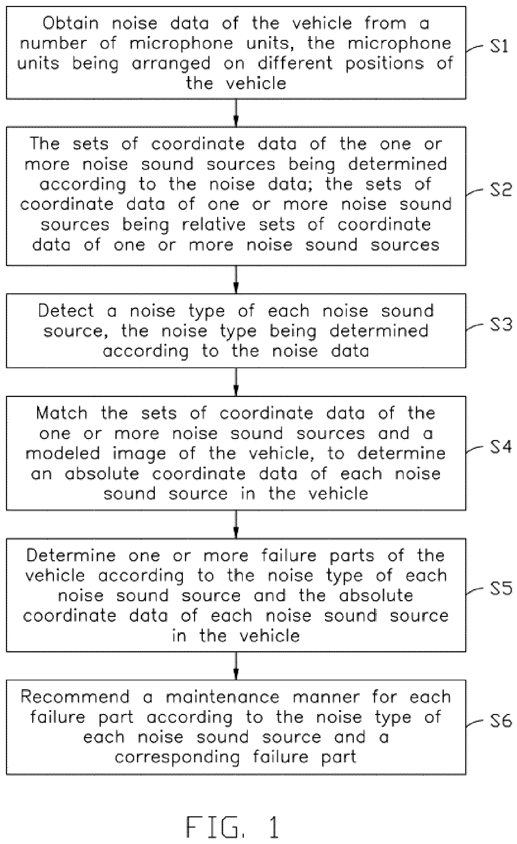

Referring to FIG. 1, a method for detecting failure of vehicle is shown. The method can detect noise data of the vehicle, and determine a failure of the vehicle according to the noise data of the vehicle. Thus, the method can lower a manpower cost and a time cost for detecting, and a safety of the vehicle is improved.

FIG. 1 is a flowchart of an embodiment of the method. According to different requirements, the order of the steps in the flowchart can be changed, and fewer steps can be utilized with departing from this disclosure.

It can be understood that, the method of the embodiment can applied on an electronic device to detect a failure part of a moving device. The electronic device can be an in-vehicle infotainment, an in-vehicle computer, the vehicle, or the like. The electronic device can further be a terminal coupled to the vehicle, such as a smart phone, a table PC (personal computer), or the like. For the convenience of description, the vehicle can be used as an example to illustrate the moving device in the following description. The method of the embodiment can obtain noise data of the vehicle and detect a failure of the vehicle according to the noise data of the vehicle.

In the embodiment, the method includes:
Step S1: obtaining noise data of the vehicle from a number of microphone units, the microphone units being arranged on different positions of the vehicle.

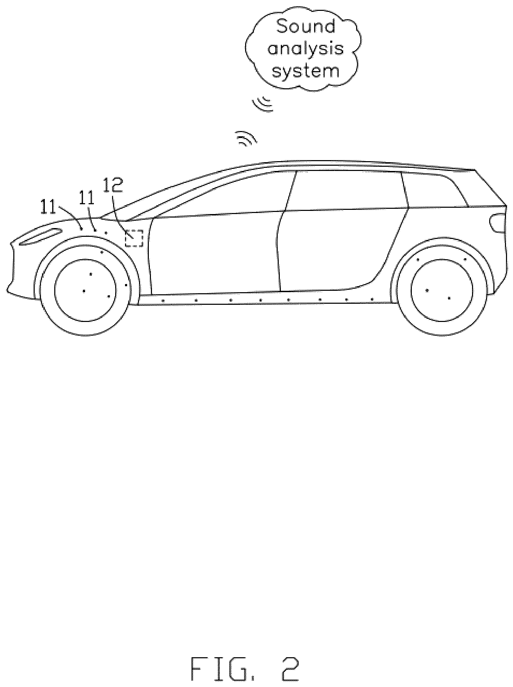

In some embodiments, the microphone units are installed on different positions of the vehicle. For example, as shown in FIG. 2, the microphone units 11 are respective installed on a chassis and a hub, installed under a hood of the vehicle 300, and the like. The microphone units can communicate with the electronic device 12 in the FIG. 2. Each microphone unit includes a microphone. Each microphone is configured to collect a corresponding noise data. Each microphone unit includes sets of microphone coordinate data. The sets of microphone coordinate data can be relative sets of microphone coordinate data. In some embodiments, the relative sets of microphone coordinate data of each microphone unit can be the sets of microphone coordinate data relative to one microphone unit, for example a fixed microphone unit.

In some embodiments, the sets of microphone coordinate data may be preset sets of coordinate data. In other embodiments, each microphone unit further includes an Ultra Wide Band (UWB) tag. Each microphone corresponds to one UWB tag. Thus, via a communication among the UWB tags of the microphone units, a relative coordinate system among the microphone units is established, and a relative sets of microphone coordinate data of each microphone unit can be obtained.

Step S2: detecting sets of coordinate data of one or more noise sound sources; the sets of coordinate data of the one or more noise sound sources are determined according to the noise data; the sets of coordinate data of one or more noise sound sources are relative sets of coordinate data of one or more noise sound sources.

In some embodiments, detecting sets of coordinate data of one or more noise sound sources can include calculating sets of coordinate data of one or more noise sound sources. The calculating sets of coordinate data of one or more noise sound sources include a step a1 and a step a2. The step a1 includes positioning the one or more noise sound sources according to at least one of a group consisting of a frequency of the noise data, an amplitude of the noise data, and a strength of the noise data. The step a2 includes generating sets of coordinate data of one or more noise sound sources according to the sets of microphone coordinate data and the positioned one or more noise sound sources. The sets of coordinate data of the one or more noise sound sources and the sets of microphone coordinate data are the sets of coordinate under the same coordinate system.

In some embodiments, the method can determine the position where the noise is generated according to the noise data collected by the microphone units, to position one or more noise sound sources. In the embodiment, the method can employ at least one of a group consisting of a beamforming method, a high resolution spectral estimation methodology, a time-difference of arrival approach, an auditory scene analysis, and a blind signal separation, to position the one or more noise sound sources.

In some embodiments, detecting sets of coordinate data of one or more noise sound sources can include obtaining sets of coordinate data of one or more noise sound sources. In some embodiments, the sets of coordinate data of one or more noise sound sources are determined by a sound analysis system. The sound analysis system can be a cloud server. The electronic device can transmit the noise data or further transmit the sets of microphone coordinate data to the sound analysis system, or the sound analysis system can directly obtain the noise data or further obtain the sets of microphone coordinate data from the microphone units, thus the sound analysis system can determine the sets of coordinate data of the one or more noise sound sources. A process of determining the sets of coordinate data of the one or more noise sound sources by the sound analysis system can be similar to a process of determining the sets of coordinate data of the one or more noise sound sources by the electronic device, and is not described herein. Obtaining sets of coordinate data of one or more noise sound source can be obtaining sets of coordinate data of one or more noise sound source from the sound analysis system.

It can be understood that, due to the noise generated by the vehicle 300 is various, and an ambient noise around the vehicle 300 may be existed during the travel of the vehicle, the method can further perform a filtering processing on the noise data outputted by the microphone unit to filter an interference before determining the sets of coordinate data of the one or more noise sound sources.

Step S3: detecting a noise type of each noise sound source, the noise type being determined according to the noise data.

In some embodiments, the electronic device can pre-store a number of voiceprint models and a number of noise types. Each voiceprint model corresponds to one noise type. It can be understood that, the electronic device can further obtain the voiceprint models and the noise types from the a database, such as a cloud database, the disclosure is not limited herein. Detecting a noise type of each noise sound source can include calculating the noise type of each noise sound source. The calculating the noise type of each noise sound source includes a step a1, a step a2, and a step a3. The step a1 includes determining a number of matching degrees between the noise data and the voiceprint models. The step a2 includes determining a number of target voiceprint models corresponding to a number of largest matching degree which each is greater than or equal to a preset threshold. The step a3 includes determining the noise type of each noise sound source to be a noise type corresponding to each of the target voiceprint models.

In some embodiments, detecting a noise type of each noise sound source can include obtaining a noise type of each noise sound source. In some embodiments, the noise type of each noise sound source is calculated by the sound analysis system. A process of calculating the noise type of each noise sound source by the sound analysis system can be similar to a process of calculating the noise type of each noise sound source by the electronic device, and is not described herein. Obtaining the noise type of each noise sound source can be obtaining the noise type of each noise sound source from the sound analysis system.

It can be understood that, the method can determine a number of matching degrees between a voiceprint of the noise data and the voiceprint models, to determine the matching degrees between the noise data and the voiceprint models. It can be understood that, the voiceprint can be a sound wave spectrum. The noise data generated by different objects include a particularity and a stability, thus different noise sound sources correspond to different voiceprints. Namely, the method can identify voiceprint to identify the noise type of each noise sound source.

In some embodiments, the sound analysis system can combine a big data and employ a deep learning method to analyze the noise data via a neural network.

It can be understood that, via detecting the noise type, it is convenient for a design of the vehicle, for example, it is convenient to redesigning the vehicle according to the noise type of each noise sound source.

In some embodiments, the noise type can include a mechanical noise, an assembling noise, a tyre noise, and a road noise.

The mechanical noise can be a noise brought by a part age, a part failure, or a part design failure. The assembling noise can be a noise brought by a part incorrect assembly and/or a part frictional resonance. The tyre noise can be a noise brought by a breakdown of the tyre, such as a tyre bulge, an uneven wearing of the tyre, a tyre piercing, or the like. The road noise can be a wind-cut noise, or a noise brought by a chassis vibration which is caused by the travel, and/or impacts of sand and stones on a chassis during a travel of the vehicle. Namely, in the aforementioned four noise types, the mechanical noise, the assembling noise, and the tyre noise can be an abnormal noise brought by the failure part, and the road noise can be a normal noise.

Step S4: matching the sets of coordinate data of the one or more noise sound sources and a modeled image of the vehicle, to determine an absolute coordinate data of each noise sound source in the vehicle.

In some embodiments, the modeled image of the vehicle can be a 3D modeled image of each part in the vehicle. It can be understood that, there is no microphone unit in the modeled image.

The step S4 may include matching the sets of coordinate data of the one or more noise sound sources and a modeled image of the vehicle to be the same coordinate system, to determine the absolute coordinate data of each noise sound source in the vehicle, thus a position of each noise sound source in the 3D modeled image of the vehicle can be determined. For example, in some embodiments, a position of at least one microphone unit in the vehicle can be determined. The position of at least one microphone unit can be a preset position, for example being installed on a rear hub of the vehicle. The method can establish a spatial coordinate system by taking the position of the at least one microphone unit as an origin of the spatial coordinate system, and match the one or more noise sound sources and a modeled image of the vehicle to be the spatial coordinate system.

Step S5: determining one or more failure parts of the vehicle according to the noise type of each noise sound source and the absolute coordinate data of each noise sound source in the vehicle.

In some embodiments, the step S5 further includes a step b1 and a step b2.

The step b1 includes determining that there is no failure part in the position corresponding to the absolute coordinate data of the noise sound source in the vehicle when the noise type of the noise sound source is the road noise.

The step b2 includes determining that the part in the position corresponding to the absolute coordinate data of the noise sound source in the vehicle is the failure part when the noise type of the noise sound source is one of a group consisting of the mechanical noise, the assembling noise, and the tyre noise.

Step S6: recommending a maintenance manner for each failure part according to the noise type of each noise sound source and a corresponding failure part.

For example, in some embodiments, when the noise type of the noise sound source is the assembling noise, and the absolute coordinate data of the noise sound source in the vehicle corresponds to a thread in the vehicle, the method can recommend a maintenance manner, for example tightening the thread.

It can be understood that, in some embodiments, if the matching degrees between each noise data and the voiceprint models each is less than the preset threshold, the method further executes the step S4, and then directly output the absolute coordinate data of each noise sound source in the vehicle, for an operator to determine whether the part of the vehicle in the position corresponding to the noise sound source is the failure part.

It can be understood that, each microphone unit can further include a signal processing unit. The signal processing unit can be configured to determine the relative sets of microphone coordinate data of each microphone unit according to a communication among the UWB tags of the microphone units. The signal processing unit can be further configured to determine the sets of coordinate data of one or more noise sound sources according to the noise data. The disclosure is not limited herein.

The method can obtain noise data of the vehicle from a number of microphone units, to detect the sets of coordinate data of one or more noise sound sources and the noise type of each noise sound source. The method matches the sets of coordinate data of the one or more noise sound sources and a modeled image of the vehicle, to determine an absolute coordinate data of each noise sound source in the vehicle. The method further determines one or more failure parts of the vehicle according to the noise type of each noise sound source and the absolute coordinate data of each noise sound source in the vehicle. The method can lower the manpower cost and the time cost for detecting, and the safety of the vehicle is improved.

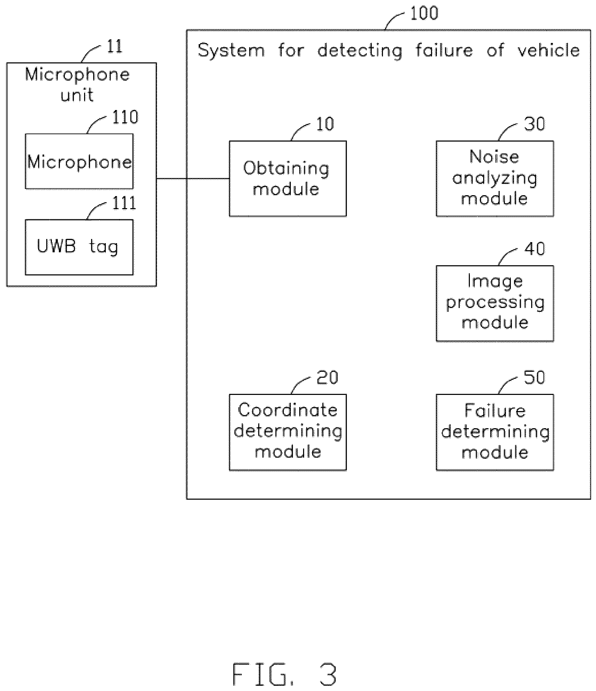

Referring to FIG. 3, a system for detecting failure of vehicle is shown. The system 100 includes an obtaining module 10, a coordinate determining module 20, a noise analyzing module 30, an image processing module 40, and a failure determining module 50.

The obtaining module 10 is configured to obtain noise data of the vehicle from a number of microphone units 11. The microphone units 11 being arranged on different positions of the vehicle. Each microphone unit 11 includes a microphone 110 and an UWB tag 111. The microphone 110 is configured to collect noise data of the vehicle. The UWB tag 111 is configured to communicate with the other UWB tags.

The coordinate determining module 20 is configured to detect sets of coordinate data of one or more noise sound sources; the sets of coordinate data of the one or more noise sound sources is determined according to the noise data; the sets of coordinate data of at least one noise sound source is relative sets of coordinate data of at least one noise sound source.

The noise analyzing module 30 is configured to detect a noise type of each noise sound source, the noise type being determined according to the noise data.

The image processing module 40 is configured to match the sets of coordinate data of the one or more noise sound sources and a modeled image of the vehicle, to determine an absolute coordinate data of each noise sound source in the vehicle.

The failure determining module 50 is configured to determine one or more failure parts of the vehicle according to the noise type of each noise sound source and the absolute coordinate data of each noise sound source in the vehicle.

**It** can be understood that, the obtaining module 10, the coordinate determining module 20, the noise analyzing module 30, the image processing module 40, and the failure determining module 50 can cooperate to execute the preceding step S1-S6 of the method for detecting failure of vehicle, a detail of the modules can be referred to the preceding step S1-S6, which are not described herein.

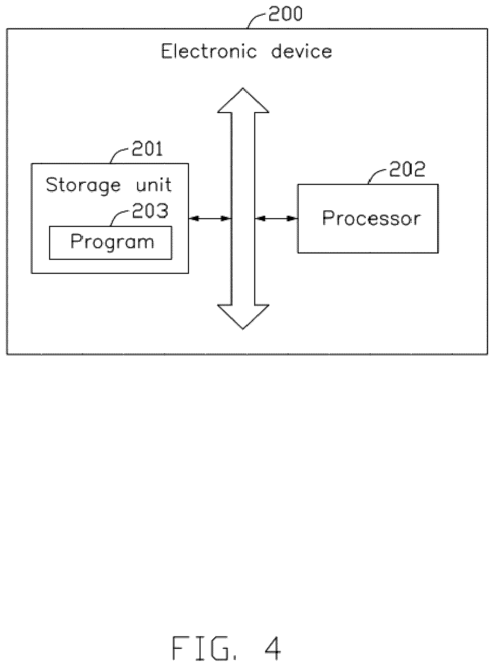

Referring to FIG. 4, an electronic device is shown. The electronic device 200 can include a storage unit 201, at least one processor 202, and one or more programs 203 stored in the storage unit 201 and can be run on the at least one processor 202.

The electronic device can be an in-vehicle infotainment, an in-vehicle computer, the vehicle, or the like. The electronic device can further be a terminal coupled to the vehicle, such as a smart phone, a table PC (personal computer), or the like. It can be understood that, the electronic device shown in FIG. 4 constitutes no limitation on the electronic device, and may include more or fewer components than those shown in the figure, or some components may be combined, or a different component deployment may be used.

The at least one processor 202 can execute the one or more programs 203 to accomplish the steps of the exemplary method, for example the steps S1-S5 in the exemplary method. Or the at least one processor 202 can execute the one or more programs 203 to accomplish the functions of the exemplary system, for example the obtaining module, the coordinate determining module, the noise analyzing module, the image processing module, and the failure determining module of the exemplary system.

The one or more programs 203 can be divided into one or more modules/units. The one or more modules/units can be stored in the storage unit 201 and executed by the at least one processor 202 to accomplish the disclosed purpose. The one or more modules/units can be a series of program command segments which can perform specific functions, and the command segment is configured to describe the execution process of the one or more programs 203 in the electronic device 200. For example, the one or more programs 203 can be divided into the obtaining module, the coordinate determining module, the noise analyzing module, the image processing module, and the failure determining module as shown in the FIG. 3, the functions of each module are as described above.

The at least one processor 202 can be one or more central processing units, or it can be one or more other universal processors, digital signal processors, application specific integrated circuits, field-programmable gate arrays, or other programmable logic devices, discrete gate or transistor logic, discrete hardware components, and so on. The at least one processor 202 can be a microprocessor or the at least one processor 202 can be any regular processor or the like. The at least one processor 202 can be a control center of the vehicle 200, using a variety of interfaces and lines to connect various parts of the entire vehicle 200.

The storage unit 201 stores the one or more programs 203 and/or modules/units. The at least one processor 202 can run or execute the one or more programs and/or modules/units stored in the storage unit 201, call out the data stored in the storage unit 201 and accomplish the various functions of the vehicle 200. The storage unit 201 may include a program area and a data area. The program area can store an operating system, and applications that are required for the at least one function, such as sound or image playback features, and so on. The data area can store data created according to the use of the vehicle 200, such as audio data, and so on. In addition, the storage unit 201 can include a non-transitory storage medium, such as hard disk, memory, plug-in hard disk, smart media card, secure digital, flash card, at least one disk storage device, flash memory, or another non-transitory storage medium.

**If** the integrated module/unit of the vehicle 200 is implemented in the form of or by means of a software functional unit and is an independent product sold or used, all parts of the integrated module/unit of the vehicle may be stored in a computer-readable storage medium. The vehicle can use one or more programs to control the related hardware to accomplish all parts of the methods of this disclosure. The one or more programs can be stored in a computer-readable storage medium. The one or more programs can accomplish the block of the exemplary method when executing by the at least one processor. The one or more stored programs can include program code. The program code can be in the form of source code, object code, executable code file, or in some intermediate form. The computer-readable storage medium may include any entity or device capable of recording and carrying the program codes, recording media, USB flash disk, mobile hard disk, disk, computer-readable storage medium, read-only memory, Random access memory, electrical carrier signals, telecommunications signals, and software distribution package. The content stored in the computer-readable storage medium can be increased or decreased in accordance with legislative requirements and regulations of patent practice jurisdictions, for example, in some jurisdictions, legislation and patent practice stipulates that computer-readable storage medium does not include electrical carrier signals or telecommunications signals.

In the present disclosure, it should be understood that the disclosed methods and system can be employed or achieved in other ways. The system exemplified is only illustrative. For example, the division of the unit is only one division of logical function, and the actual implementation may have an additional division manner.

In addition, various functional units in the various embodiments of the disclosure may be integrated in one processing unit, each unit may be physically separated, or two or more units may be integrated in one unit. The above-mentioned integrated unit can be realized in the form of hardware or software functional unit.

To those skilled in the art, it is apparent that the present disclosure is not limited to the details of the above exemplary embodiments, and the present disclosure may be implemented with other embodiments without departing from the spirit or basic features of the present disclosure. Thus, in any way, the embodiments should be regarded as exemplary, not limitative; the scope of the present disclosure is limited by the appended claims, instead of the above depiction. Thus, all variations intended to fall into the meaning and scope of equivalent elements of the claims should be covered within the present disclosure. No reference signs in the claims should be regarded as limiting the involved claims. Besides, it is apparent that the term "comprise" does not exclude other modules or steps, and singularity does not exclude plurality. A plurality of units or modules stated in a system claim may also be implemented by a single unit or module through software or hardware. Terms such as the first and the second are used to indicate names, but do not indicate any particular sequence.

The embodiments described above are provided by way of example only, and various other modifications will be apparent to persons skilled in the field without departing from the scope of the invention as defined by the appended claims. It will be appreciated that, numerous variations and substitutions will occur to those skilled in the art without departing from the scope of the disclosure. Those variations and substitutions made in accordance with the spirit of the disclosure are within the scope of the present disclosure.

## Claims

1. A method for detecting failure of a vehicle **characterized in** it comprising:
obtaining noise data of the vehicle from a plurality of microphone units (11), the microphone units (11) being arranged on different positions of the vehicle; the vehicle comprising a plurality of parts;
detecting sets of coordinate data of one or more noise sound sources, the sets of coordinate data of the one or more noise sound sources being determined according to the noise data, the sets of coordinate data of the one or more noise sound sources being relative sets of coordinate data;
detecting a noise type of each of the one or more noise sound sources, the noise type being determined according to the noise data;
matching the sets of coordinate data of the one or more noise sound sources and a modeled image of the vehicle, to determine an absolute coordinate data of each of the one or more noise sound sources in the vehicle; the modeled image of the vehicle being a 3 dimensional (3D) modeled image comprising each of the parts in the vehicle; and
determining one or more failure parts of the vehicle according to the noise type of each of the one or more noise sound sources and the absolute coordinate data of each of the one or more noise sound sources in the vehicle.

2. The method according to claim 1, wherein the determining one or more failure parts of the vehicle according to the noise type of each of the one or more noise sound sources and the absolute coordinate data of each of the one or more noise sound sources in the vehicle comprises:
determining that there is no failure part in the position corresponding to the absolute coordinate data of the noise sound source in the vehicle when the noise type of the noise sound source is a road noise; and
determining that the part of the vehicle in the position corresponding to the absolute coordinate data of the noise sound source in the vehicle is the failure part when the noise type of the noise sound source is one of a group consisting of a mechanical noise, an assembling noise, and a tyre noise.

3. The method according to claim 1, wherein the method further comprises:
recommending a maintenance manner for each of the failure parts according to the noise type of each noise sound source and a corresponding failure part.

4. The method according to claim 1, wherein each of the microphone units (11) comprises a sets of microphone coordinate data, the sets of microphone coordinate data are relative sets of microphone coordinate data, the detecting the sets of coordinate data of the one or more noise sound sources comprises:
positioning the one or more noise sound sources according to at least one of a group consisting of a frequency of the noise data, an amplitude of the noise data, and a strength of the noise data; and
generating the sets of coordinate data of the one or more noise sound sources according to the sets of microphone coordinate data and the positioned one or more noise sound sources; the sets of coordinate data of the one or more noise sound sources and the sets of microphone coordinate data being the sets of coordinate under the same coordinate system.

5. The method according to claim 1, wherein the detecting the noise type of each of the one or more noise sound sources comprises:
determining a plurality of matching degrees between the noise data and a plurality of voiceprint models; each of the plurality of voiceprint models corresponding to one of a plurality of noise types;
determining a plurality of target voiceprint models corresponding to a plurality of largest matching degrees which each is greater than or equal to a preset threshold; and
determining the noise type of each of the one or more noise sound sources to be one of the noise types corresponding to each of the target voiceprint models.

6. An electronic device (12, 200) comprising:
a storage unit (201);
at least one processor (202); and
the electronic device (12, 200) being **characterized in** the storage unit (201) storing one or more programs (203), which when executed by the at least one processor (202), cause the at least one processor (202) to:
obtain noise data of the vehicle from a plurality of microphone units (11), the microphone units (11) being arranged on different positions of the vehicle; the vehicle comprising a plurality of parts;
detect sets of coordinate data of one or more noise sound sources, the sets of coordinate data of the one or more noise sound sources being determined according to the noise data, the sets of coordinate data of the one or more noise sound sources being relative sets of coordinate data;
detect a noise type of each of the one or more noise sound sources, the noise type being determined according to the noise data;
match the sets of coordinate data of the one or more noise sound sources and a modeled image of the vehicle, to determine an absolute coordinate data of each of the one or more noise sound sources in the vehicle; the modeled image of the vehicle being a 3 dimensional (3D) modeled image comprising each of the parts in the vehicle; and
determine one or more failure parts of the vehicle according to the noise type of each of the one or more noise sound sources and the absolute coordinate data of each of the one or more noise sound sources in the vehicle.

7. The electronic device (12, 200) according to claim 6, further causing the at least one processor (202) to:
determine that there is no failure part in the position corresponding to the absolute coordinate data of the noise sound source in the vehicle when the noise type of the noise sound source is a road noise; and
determine that the part of the vehicle in the position corresponding to the absolute coordinate data of the noise sound source in the vehicle is the failure part when the noise type of the noise sound source is one of a group consisting of a mechanical noise, an assembling noise, and a tyre noise.

8. The electronic device (12, 200) according to claim 6, further causing the at least one processor (202) to:
recommend a maintenance manner for each of the failure parts according to the noise type of each noise sound source and a corresponding failure part.

9. The electronic device (12, 200) according to claim 6, wherein:
each of the microphone units (11) comprises a sets of microphone coordinate data, the sets of microphone coordinate data are relative sets of microphone coordinate data;
the electronic device (12, 200) further causes the at least one processor (202) to:
position the one or more noise sound sources according to at least one of a group consisting of a frequency of the noise data, an amplitude of the noise data, and a strength of the noise data; and
generate the sets of coordinate data of the one or more noise sound sources according to the sets of microphone coordinate data and the positioned one or more noise sound sources; the sets of coordinate data of the one or more noise sound sources and the sets of microphone coordinate data being the sets of coordinate under the same coordinate system.

10. The electronic device (12, 200) according to claim 6, further causing the at least one processor (202) to:
determine a plurality of matching degrees between the noise data and a plurality of voiceprint models; each of the plurality of voiceprint models corresponding to one of a plurality of noise types;
determine a plurality of target voiceprint models corresponding to a plurality of largest matching degrees which each is greater than or equal to a preset threshold; and
determine the noise type of each of the one or more noise sound sources to be one of the noise types corresponding to each of the target voiceprint models.

11. A non-transitory storage medium (201) storing a set of commands, when the commands being executed by at least one processor (202) of a vehicle, being **characterized in** causing the at least one processor (202) to:
obtain noise data of the vehicle from a plurality of microphone units (11), the microphone units (11) being arranged on different positions of the vehicle; the vehicle comprising a plurality of parts;
detect sets of coordinate data of one or more noise sound sources, the sets of coordinate data of the one or more noise sound sources being determined according to the noise data, the sets of coordinate data of the one or more noise sound sources being relative sets of coordinate data;
detect a noise type of each of the one or more noise sound sources, the noise type being determined according to the noise data;
match the sets of coordinate data of the one or more noise sound sources and a modeled image of the vehicle, to determine an absolute coordinate data of each of the one or more noise sound sources in the vehicle; the modeled image of the vehicle being a 3 dimensional (3D) modeled image comprising each of the parts in the vehicle; and
determine one or more failure parts of the vehicle according to the noise type of each of the one or more noise sound sources and the absolute coordinate data of each of the one or more noise sound sources in the vehicle.

12. The non-transitory storage medium (201) according to claim 11, further causing the at least one processor (202) to:
determine that there is no failure part in the position corresponding to the absolute coordinate data of the noise sound source in the vehicle when the noise type of the noise sound source is a road noise; and
determine that the part of the vehicle in the position corresponding to the absolute coordinate data of the noise sound source in the vehicle is the failure part when the noise type of the noise sound source is one of a group consisting of a mechanical noise, an assembling noise, and a tyre noise.

13. The non-transitory storage medium (201) according to claim 11, further causing the at least one processor (202) to:
recommend a maintenance manner for each of the failure parts according to the noise type of each noise sound source and a corresponding failure part.

14. The non-transitory storage medium (201) according to claim 11, wherein:
each of the microphone units (11) comprises a sets of microphone coordinate data, the sets of microphone coordinate data is relative sets of microphone coordinate data;
the non-transitory storage medium (201) further causes the at least one processor (202) to:
position the one or more noise sound sources according to at least one of a group consisting of a frequency of the noise data, an amplitude of the noise data, and a strength of the noise data; and
generate the sets of coordinate data of the one or more noise sound sources according to the sets of microphone coordinate data and the positioned one or more noise sound sources; the sets of coordinate data of the one or more noise sound sources and the sets of microphone coordinate data being the sets of coordinate under the same coordinate system.

15. The non-transitory storage medium (201) according to claim 11, further causing the at least one processor (202) to:
determine a plurality of matching degrees between the noise data and a plurality of voiceprint models; each of the plurality of voiceprint models corresponding to one of a plurality of noise types;
determine a plurality of target voiceprint models corresponding to a plurality of largest matching degrees which each is greater than or equal to a preset threshold; and
determine the noise type of each of the one or more noise sound sources to be one of the noise types corresponding to each of the target voiceprint models.
